(19) Europäisches Patentamt / European Patent Office / Office européen des brevets

(11) **EP 2 173 055 A1**

(12) **EUROPEAN PATENT APPLICATION**
published in accordance with Art. 153(4) EPC

(43) Date of publication:
**07.04.2010 Bulletin 2010/14**

(51) Int Cl.:
***H04L 9/00*** *(2006.01)*

(21) Application number: **08862820.1**

(22) Date of filing: **26.09.2008**

(86) International application number:
**PCT/CN2008/072547**

(87) International publication number:
**WO 2009/076811 (25.06.2009 Gazette 2009/26)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.12.2007 CN 200710302145**

(71) Applicant: **Huawei Technologies Co., Ltd.**
**Shenzhen, Guangdong 518129 (CN)**

(72) Inventor: **GAO, Hongtao**
**Huawei Technologies Co., Ltd.**
**Shenzhen 518129 (CN)**

(74) Representative: **Kreuz, Georg Maria**
**Huawei Technologies**
**Riesstrasse 25**
**80992 München (DE)**

(54) **A METHOD, A SYSTEM, A CLIENT AND A SERVER FOR KEY NEGOTIATING**

(57)    A key agreement method includes: sending a Client_Hello message to a server; receiving information which is returned by the server and includes a key agreement mode of Identity-Based Cryptography (IBC); receiving a server_key_exchange message sent by the server; obtaining a master key; and sending a client_key_exchange message to the server. Another key agreement method includes: receiving a Client_Hello message sent by a client; selecting a CipherSuite of a key agreement mode of IBC from the CipherSuite list, and sending the selected CipherSuite to the client; sending a server_key_exchange message to the client; receiving a client_key_exchange message sent by the client; and obtaining a master key according to the information carried in the client_key_exchange message. A key agreement system, and the corresponding client and server are also disclosed to make the key agreement process convenient, secure and efficient.

Client → Server

201. Client_Hello message
202. Selected key agreement mode
203. server_key_exchange message
204. ServerHelloDone
205. client_key_exchange message

206. Calculate out a pre-shared key
207. Generate a pre-master key
208. Generate a master key out of the pre-master key

209. Calculate out a pre-shared key
2010. Generate a pre-master key
2011. Generate a master key out of the pre-master key

FIG. 2

**Description**

**Field of the Invention**

The present invention relates to communication technologies, and in particular, to a key agreement method applicable to the Transport Layer Security (TLS) protocol, a key agreement system, a client, and a server.

**Background of the Invention**

TLS is a protocol applied widely in the communication field. It authenticates both communication parties in the application layer, and protects data confidentiality and integrity. In TLS, the handshake protocol part is responsible for the authentication, negotiation encryption, integrity protection algorithm, and key between both communication parties. Because keys are not open information, both communication parties need to negotiate a key when setting up the communication so that both parties can obtain the same key which is secure and accurate.

Currently, five key agreement methods are applied in the handshake protocol: Rivest-Shamir-Adleman (RSA), Anonymous Diffie-Hellman (DH_anon), Diffie-Hellman with signature, Ephemeral Diffie-Hellman with signature (DHE), and Pre-Shared Key (PSK). The processes of implementing the foregoing key agreement methods are described below.

1. RSA

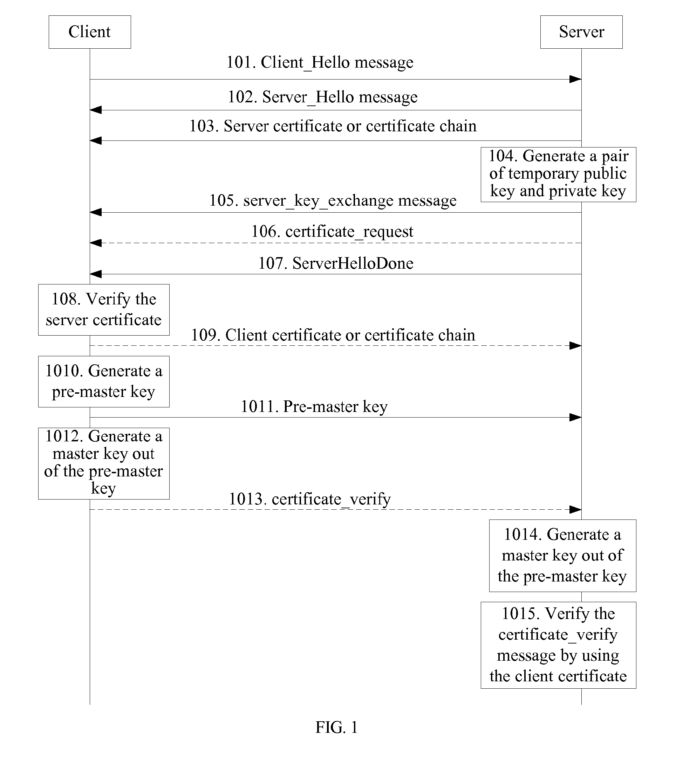

The RSA algorithm is an asymmetric cryptographic algorithm, and is named after its inventor. The RSA algorithm is a certificate-based key agreement method. As shown in FIG. 1, its process includes the following steps:

Step 101: The client initiates a session by sending a Client_Hello message.

In TLS, the party who initiates the session first is defined as a client, and the party who receives the session is defined as a server. Therefore, whenever a terminal initiates a session to another terminal, the party who sends the Client_Hello message is referred to as a client, and the party who receives the Client_Hello message is referred to as a server.

The parameters of the Client_Hello message include: highest TLS/Secure Socket Layer (SSL) version supported by the client, random number, session identifier, CipherSuite list supported by the client, and supported compression method list.

Step 102: After receiving the Client_Hello message, the server selects the RSA-supported CipherSuite from the CipherSuite list supported by the client, and returns a server_hello message.

The server_hello message carries the CipherSuite selected by the server and other parameters.

In step 101 and step 102, the client and the server negotiate the security capability to determine the specific CipherSuite to be applied.

Step 103: The server sends a certificate message to the client.

The certificate message carries a certificate or a certificate chain.

If the certificate sent by the server in step 103 is a signing certificate, the server needs to generate a pair of temporary public key and private key; if the certificate is an encryption certificate, no pair of temporary public key and private key needs to be generated. The RSA process is described below, supposing the certificate sent by the server is a signing certificate.

Step 104: The server generates a pair of temporary public key and private key.

Step 105: The server sends a server_key_exchange message to the client. The server_key_exchange message carries the temporary public key generated in step 104 and the signature of the temporary public key. The signature is generated by the server with the private key corresponding to the server certificate in step 103.

Step 106: The server sends a certificate_request message to the client.

This step is optional. If the server needs to authenticate the client, the server sends a certificate_request message to the client. The certificate_request message carries an expected certificate type and a list of acceptable certificate management organizations.

Step 107: The server sends a ServerHelloDone message to the client, indicating completion of sending the message of the server part. This message carries no parameter. The server waits for a response from the client after sending this message.

In steps 103-107, the message of the server part for key agreement is sent.

Step 108: The client verifies the server certificate sent in step 103.

After the certificate passes the verification, the signature of the temporary public key of the server sent in step 105 is verified by using the public key of the server in the certificate. If the verification succeeds, the server is authenticated successfully and regarded as secure and valid.

Step 109: The client sends a certificate message to the server. The message carries a certificate or a certificate chain of the client.

This step is generally performed when the server requires the certificate of the client, namely, performed after the server finishes step 106.

Step 1010: The client generates a pre-master key.

Step 1011: The client sends the pre-master key to the server.

The client sends a client_key_exchange message to the server. The message carries the pre-master key encrypted through the temporary public key of the server sent in step 105.

Step 1012: The client calculates a master key based on the pre-master key through a specified algorithm.

Step 1013: The client sends a certificate_verify message to the server.

This step is optional. If the client has performed step 109, namely, has sent a client certificate to the server, the client concatenates all messages exchanged between both parties before this step to the master key, and uses a private key of the client to sign the concatenated data. Afterward, the client sends the signature (namely, the certificate_ verify message) to the server.

Step 1014: The server calculates a master key based on the pre-master key through a specified algorithm.

The server uses a temporary private key of the server to decrypt the message sent in step 1011, and thus obtains the pre-master key. Afterward, the server calculates the master key based on the pre-master key through the specified algorithm.

At this time, both the server and the client obtain the master key, and the key agreement is basically completed. However, to ensure security, the server needs to authenticate the client, namely, perform step 106, step 109, and step 1013. Therefore, the server needs to perform step 1015 to authenticate the client and ensure that the key agreement is secure and reliable.

Step 1015: The server uses the client certificate to verify the data sent in step 1013. If the verification succeeds, the client is authenticated successfully, and the key agreement is regarded as secure and reliable.

In steps 108-1015, the server authenticates the client, and the message of the client part for key agreement is sent. Now the key agreement process which uses the RSA encryption algorithm for authentication is completed.

2. DH_anon, Diffie-Hellman with signature, and DHE

Diffie-Hellmon (DH) is a key agreement mechanism. In this mechanism, both communication parties generate public parameters and private parameters respectively, and then exchange the public parameters. Afterward, both parties may obtain the same key through a specified algorithm according to respective private parameters and the public parameters of the opposite party.

In DH_anon mode, the server sends the DH public parameters of the server to the client through a server_ key_exchange message, and the client sends the DH public parameters of the client to the server through a client_key_ exchange message. Afterward, the server and the client calculate out a pre-shared key through the public parameters respectively, and then generate a master key, thus completing the key agreement.

Diffie-Hellman with signature means that the DH public parameters of both communication parties are carried in the certificate of either party and sent to the opposite party. The server and the client extract the DH public parameters of the opposite party from the certificate of the opposite party, and calculate a pre-master key, and then generate a master key, thus completing key agreement.

DHE means that the DH public parameters of both communication parties are signed by either party and sent to the opposite party. That is, the server signs its DH public parameters by using the private key corresponding to the server certificate, and then sends the parameters and signature to the client; the client verifies the signature, and judges whether the parameters have been altered in the transmission process, thus preventing man-in-the-middle attacks. The client signs the DH public parameters of the client and sends the parameters and signature to the server; the server verifies the signature, and judges whether the parameters have been altered in the transmission process, thus preventing man-in-the-middle attacks. Afterward, the server and the client extract the DH public parameters of the opposite party from the certificate of the opposite party, calculate a pre-master key, and then generate a master key, thus completing key agreement.

3. PSK

The PSK mode implements the authentication of both parties and temporary session key agreement based on a key pre-shared and known by both the client and the server.

The following defects in the conventional art have become apparent:

1. The RSA mode is a certificate-based key agreement method. This method binds the user identity (ID) to the public key by issuing a certificate for the user. Before the user uses the certificate, the validity of the certificate needs to be verified at the digital Certificate Authority (CA) center which issues the certificate; that is, the operations in step 108 need to be performed, so that the identity of the opposite party is authenticated. The verification includes: verifying the CA signature, which may involve certificate chains and CA cross-authentication; verifying whether the certificate is added to the Certificate Revocation List (CRL); and verifying whether the certificate is in the validity period. Such verification operations consume a large number of storage and processor resources, especially in view of the limited processing capability of the mobile terminal and limited transmission speed of the mobile network.

2. If the DH algorithm is used for key agreement, the communication parties cannot be authenticated. If a malicious man-in-the-middle attacks the opposite party under the disguise of a client or a server, the disguise is not identifiable. Therefore, the DH algorithm for key agreement is vulnerable to man-in-the-middle attacks, and leads to low security of the system.

3. The key agreement in PSK mode requires deployment of a key known by both communication parties. The implementation depends on a specific environment, and is very difficult in some environments, especially in a network. In PSK mode, the key is shared by both parties. Therefore, it is impossible to prevent one party from denying an action; that is, the non-repudiation problem exists.

**Summary of the Invention**

The present invention provides a key agreement method, a key agreement system, a client, and a server so that the key agreement process is convenient, secure, and easily practicable.

As a first aspect of the present invention a first key agreement method is provided. The method includes:

sending a Client_Hello message that carries a CipherSuite list to a server, and initiating a session, where the CipherSuite list includes CipherSuites of a key agreement mode of Identity-Based Cryptography (IBC);
receiving about a selection of the key agreement mode of IBC from the server;
receiving a server_key_exchange message sent by the server;
receiving a ServerHelloDone message sent by the server;
obtaining a master key; and
sending a client_key_exchange message to the server so that the server can obtain a master key through information carried in the client_key_exchange message.

As a second aspect of the present invention a second key agreement method is provided. The method includes:

receiving a Client_Hello message that is sent by a client and carries a CipherSuite list, where the CipherSuite list includes CipherSuites of a key agreement mode of IBC;
selecting a CipherSuite of the key agreement mode of IBC from the CipherSuite list, and sending the selected CipherSuite to the client;
sending a server_key_exchange message to the client;
sending a ServerHelloDone message to the client;
receiving a client_key_exchange message sent by the client; and
obtaining a master key according to information carried in the client_key_exchange message.

As a third aspect of the present invention a key agreement system is provided. The system includes:

a client, adapted to: send a Client_Hello message that carries a CipherSuite list, where the CipherSuite list includes CipherSuites of a key agreement mode of IBC; receive information about a selection of the key agreement mode of IBC; receive a server_key_exchange message; receive a ServerHelloDone message; obtain a master key; and send a client_key_exchange message; and
a server, adapted to: receive the Client_Hello message sent by the client; select a CipherSuite of the key agreement mode of IBC from the CipherSuite list, and send the selected CipherSuite to the client; send the server_key_exchange message to the client; receive the client_key_exchange message sent by the client; send the ServerHelloDone message to the client; and obtain a master key according to the information carried in the client_key_exchange message.

As a fourth aspect of the present invention a client is provided. The client includes:

a session initiating unit, adapted to: send a Client_Hello message that carries a CipherSuite list to a server, and initiate a session, where the CipherSuite list includes CipherSuites of a key agreement mode of IBC;
a client_key_exchange message sending unit, adapted to: send a client_key_exchange message to the server so that the server can obtain a master key through the information carried in the client_key_exchange message;
a first receiving unit, adapted to: receive information about a selection of the key agreement mode of IBC; receive a server_key_exchange message sent by the server; and receive a ServerHelloDone message sent by the server; and

a client key obtaining unit, adapted to obtain a master key through the information received by the first receiving unit.

As a fifth aspect of the present invention a server is provided. The server includes:

a second receiving unit, adapted to: receive a Client_Hello message that is sent by a client and carries a CipherSuite list; and receive a client_key_exchange message sent by the client;
a selecting unit, adapted to: select a CipherSuite of the key agreement mode of IBC from the CipherSuite list, and send the selected CipherSuite to the client;
a server_key_exchange message sending unit, adapted to send a server_key_exchange message to the client;
a ServerHelloDone message sending unit, adapted to send a ServerHelloDone message to the client; and
a server key obtaining unit, adapted to obtain a master key according to the information carried in the client_key_ exchange message.

As seen from the foregoing technical solution, the present invention applies the key agreement mode of IBC, and uses the server ID as a public key of the server, without depending on the certificate-based authentication. Therefore, the key agreement process is simplified, and the system resources are saved. Moreover, the key agreement mode of IBC finishes authenticating the opposite party simply in the key agreement process, thus preventing man-in-the-middle attacks and ensuring the system security. The present invention does not use the pre-shared key known by both communication parties, thus preventing one party from denying a performed action and avoiding the non-repudiation problem. Because no special setting is required, the technical solution is widely applicable.

## Brief Description of the Drawings

FIG. 1 is a flowchart in the conventional art;
FIG. 2 is a flowchart of a key agreement method provided in a first embodiment of the present invention;
FIG. 3 is a flowchart of a key agreement method provided in a second embodiment of the present invention;
FIG. 4 is a flowchart of a key agreement method provided in a third embodiment of the present invention; and
FIG. 5 shows a structure of a key agreement system provided in an embodiment of the present invention.

## Detailed Description of the Invention

The embodiments of the present invention provide a key agreement method applicable to the TLS protocol, a key agreement system, a client, and a server so that the key agreement process is simplified, widely applicable, and more secure.
In embodiments of the key agreement method, an asymmetric key mechanism known as Identity-Based Cryptography (IBC) is applied to key agreement. The user public key applied in this method may be a user ID, or a Hash value of the user ID after a Hash operation. A private key may derive from the public key through a specific algorithm.
The Hash formula used in the Hash operation is a public parameter which is available to any terminal. Therefore, the Hash value of the user ID after the Hash operation is known as a public key, and the meaning of this public key is the same as the meaning of the public key obtained directly from the user ID. A public key based on the user Identity includes a public key obtained from the Hash value of the user ID after the Hash operation and a public key obtained directly from the user ID.
The methods frequently used in IBC include: Identity-Based Authentication and Key Agreement (IBAKA), Identity-Based Encryption (IBE), and Identity-Based Signature (IBS). The embodiments of the present invention provide the specific modes of using such methods to implement key agreement, as detailed below.
In the TLS protocol, there are many methods for key agreement, encryption and integrity protection in the handshake protocol part. Various key agreement modes, various encryption methods, and various integrity protection methods may be combined flexibly. The embodiments of the present invention improve the key agreement in the TLS protocol, namely, perform key agreement through the foregoing IBC method.
In the TLS protocol, different CipherSuites are defined for each different combination of key agreement, encryption and integrity protection. One CipherSuite identifies a combination of key agreement, encryption and integrity protection. In the process of creating a session between both communication parties, selecting a CipherSuite means selecting the key agreement, encryption and integrity protection method identified by the CipherSuite.

For example, in the CipherSuite TLS_RSA_WITH_DBS_CBC_SHA, RSA means that key agreement is performed in RSA mode; DES_CBC means that an encryption operation is performed in Cipher Block Chaining (CBC) mode, and the CBC mode uses the Data Encryption Standard (DES) algorithm; and SHA means that an integrity operation is performed through a Safe Hash Algorithm (SHA).

The following CipherSuite instance specifies the encryption and integrity protection methods that may be combined with the RSA mode:

    Cipher Suite TLS_RSA_WITH_NULL_MD5
    Cipher Suite TLS_RSA_WITH_NULL_SHA
    Cipher Suite TLS_RSA_WITH_RC4_128_MD5
    Cipher Suite TLS_RSA_WITH_RC4_128_SHA
    Cipher Suite TLS_RSA_WITH_IDEA_CBC_SHA
    Cipher Suite TLS_RSA_WITH_DES_CBC_SHA
    Cipher Suite TLS_RSA_WITH_3DES_EDE_CBC_SHA

Where "NULL" means no encryption; RC4_128, International Data Encryption Algorithm (IDEA)_CBC, DES_CBC, and 3DES_Encrypt Decrypt Encrypt (EDEL_CBC represent different encryption methods; Message Digest version 5 (MD5) and SHA represent different integrity algorithms.

In the Client_Hello message, a CipherSuite list includes the methods for key agreement, encryption and integrity protection supported by the client, and the methods are arranged in descending order of priority.

The CipherSuite list in the prior art includes no key agreement method of IBC. Therefore, the key agreement method provided in this embodiment is marked as a CipherSuite of IBC. For example, the key agreement method is marked as a CipherSuite of IBAKA:

    TLS_IBAKA_CK_WITH_RC4_128_SHA
    TLS_IBAKA_CK_WITH_3DES_EDE_CBC_SHA
    TLS_IBAKA_CK_WITH_AES_128_CBC_SHA
    TLS_IBAKA_CK_WITH_AES_256_CBC_SHA

where IBAKA_CK ("CK" represents Chen-Kudla) means that key agreement is performed in IBAKA mode through the Chen-Kudla algorithm. The IBAKA mode may use any of these algorithms: Chen-Kudla algorithm, Smart-Chen-Kudla algorithm, and so on. The Chen-Kudla algorithm is taken as an example herein. "IBAKA_CK" is for the exemplary purpose only, and may be replaced by other predefined characters.

The key agreement method is marked as a CipherSuite of IBE:

    TLS_IBE_BF_WITH_RC4_128_SHA
    TLS_IBE_BF_WITH_3DES_EDE_CBC_SHA
    TLS_IBE_BF_WITH_AES_128_CBC_SHA
    TLS_IBE_BF_WITH_AES_256_CBC_SHA

where IBE_BF ("BF" represents Boneh-Franklin) means that key agreement is performed in IBE mode through the Boneh-Franklin algorithm. The IBE mode may use any of these algorithms: Boneh-Franklin algorithm, Boneh-Boyen algorithm, and so on. The Boneh-Franklin algorithm is taken as an example herein. "IBE_BF" is for the exemplary purpose only, and may be replaced by other predefined characters.

The key agreement method is marked as a CipherSuite of IBS:

    TLS_DHE_IBS_Hs_WITH_RC4_128_SHA
    TLS_DHE_IBS_Hs_WITH_3DES_EDE_CBC_SHA
    TLS_DHE_IBS_Hs_WITH_AES_128_CBC_SHA
    TLS_DHE_IBS_Hs_WITH_AES_256_CBC_SHA

where DHE_IBS_Hs ("Hs" represents Hess) means that IBS is used to protect the ephemeral DH parameters through a Hess algorithm. The IBS mode may use any of these algorithms: Hess algorithm, Cha-Cheon algorithm, and so on. The Hess algorithm is taken as an example herein. "DHE_IBS_Hs" is for the exemplary purpose only, and may be replaced by other predefined characters.

The first embodiment of the key agreement method under the present invention takes IBAKA as an example to describe the key agreement process.

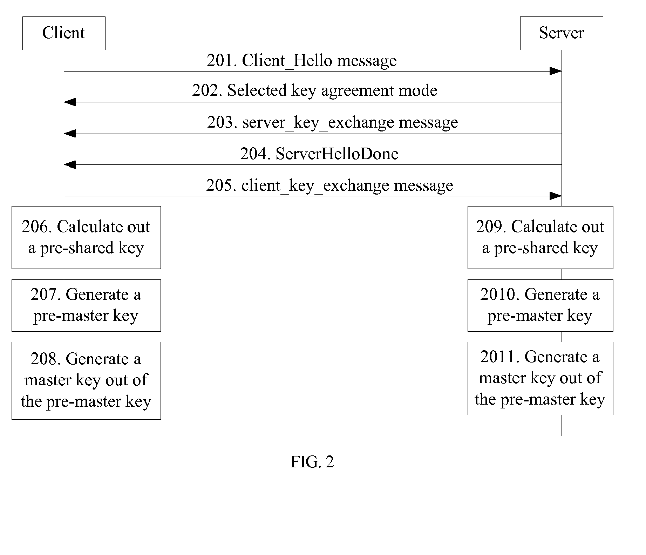

The specific process of using IBAKA to implement key agreement comes in many types. FIG. 2 shows an exemplary process of the key agreement method provided in the first embodiment of the present invention.

Step 201: The client initiates a session by sending a Client_Hello message to the server.

The parameters carried in the Client_Hello message include: highest TLS/SSL version supported by the client, random number, session identifier, supported CipherSuite list, and supported compression method list.

If the client supports IBAKA and expects to perform key agreement in IBAKA mode, a CipherSuite based on IBAKA is set to be of higher priority, namely, placed at the forepart of the CipherSuite list.

The client may support many key agreement modes. Sometimes exceptions may occur; for example, the server does not support the IBAKA mode, and another mode needs to be selected. The client needs to set priority for each supported key agreement mode so that the server may select the key agreement mode most desired by the client.

The IBAKA mode is applied in the first embodiment. Therefore, IBAKA is of the highest priority in the CipherSuite list of the Client_Hello message.

Step 202: The server selects a key agreement mode, and sends it to the client.

After receiving the Client_Hello message, the server selects the CipherSuite which is supported by the server and is of the highest priority from the CipherSuite list provided in the Client_Hello message. In this embodiment, the selected CipherSuite is a CipherSuite based on IBAKA, for example, TLS_IBAKA_CK_WITH_AES_128_CBC_SHA. Afterward, the selected CipherSuite is sent to the client. Once the CipherSuite based on IBAKA is selected, the key agreement is performed in IBAKA mode.

In step 201 and step 202, the client and the server finish the security capability negotiation, and select the IBAKA mode for key agreement.

Step 203: The server sends a server_key_exchange message to the client. The message carries the IBC parameters and the public key information of the server.

The public key information of the server includes the public key of the server, namely, the server ID, and may further include the validity period of the public key of the server. The validity period of the public key of the server controls the validity of the public key of the server. When this validity period expires, a new public key of the server (namely, a new server ID) needs to be used. After receiving the validity period of the public key of the server, the client judges whether the received public key has expired by checking expiry of this validity period.

In IBC, the private key of the server is generated by the Key Generation Center (KGC) by using the public key of the server. If the validity period of the public key of the server is set, the KGC uses the public key of the server and the validity period of the public key of the server to generate a private key of the server. Therefore, upon expiry of the public key of the server, the private key of the server expires accordingly. That is, the validity period of the public key is equivalent to the validity period of the private key of the server. After expiry of the validity period, if a new public key of the server is used, the server needs to send a new server ID and a new validity period to the KGC to apply for a new private key.

In the first embodiment of the key agreement method under the present invention, the server and the client share the same KGC.

The public key information of the server may include the identifier of the server KGC. The identifier is a domain name address of the KGC. After obtaining the domain name address of the KGC, the client may visit the domain name address to obtain the public parameters of the KGC.

The server IBC parameters vary with the algorithm adopted in IBAKA. Supposing IBAKA adopts the Chen-Kudla algorithm, the server IBC parameters may be represented by $T_s$. To obtain $T_s$, the server needs to perform two steps beforehand:

1. The server needs to apply for a private key from the KGC, and the private key is within the validity period.
The server sends a server ID to the KGC. The server ID may be represented by $ID_s$. The KGC multiplies the Hash value of the server ID "$Q_s = H1(ID_s)$" by the master key "s" of the KGC, uses the product to generate a private key "$S_s$" of the server, and returns the private key to the server.
The private key "$S_s$" of the server may be expressed through the following formula:

$$S_S = sQ_S$$

2. The server obtains the public parameters of the KGC. KGC refers to the KGC that generates the private key for the client and the server. Public parameters of the KGC include: G1, G2, e^, P, Ppub, H1, and H2.

G1 and G2 are an additive cyclic group and a multiplicative cyclic group constructed on the basis of an elliptical curve respectively. e^ is a bilinear mapping operation. e^: G1 * G1 = G2. That is, through bilinear mapping, the elements in G1 are mapped to the elements in G2. P is a generator of the group G1, and parameter Ppub = sP, where s is the master key of the KGC and is a random number selected by the KGC in an integer field modulo a prime number. H1 and H2 are two Hash functions. H1 converts any binary string composed of 0s and 1s into the elements in G1. H2 converts the elements in G2 into the binary string composed of 0s and 1s.

The server IBC parameter "$T_s$" is a product of the random number "a" selected by the server and the Hash value "$Q_s = H1 (ID_s)$" of the server ID. Therefore, the server IBC parameter "$T_s$" is expressed through the following formula:

$$T_S = aQ_S.$$

The foregoing step 1 and step 2 may be performed before step 203 after start of this process, or performed before start of this process, for example, performed at the previous key agreement of the server.

Step 204: The server sends a ServerHelloDone message to the client, indicating completion of sending the message of the server part. This message carries no parameter. The server waits for a response from the client after sending this message.

Step 205: The client sends a Client_key_exchange message to the server. This message carries the IBC parameters and the public key information of the client.

The public key information of the client includes the public key of the client, namely, the client ID; and may further include the validity period of the public key of the client. Like the validity period of the public key of the server, this validity period controls the validity of the public key of the client. When this validity period expires, a new public key of the client needs to be used. After receiving the validity period of the public key of the client, the server may judge whether the public key of the client expires by checking expiry of this validity period.

Meanwhile, the private key of the client is generated by the KGC by using the public key of the client. If the validity period of the public key of the client is set, the KGC uses the public key of the client and the validity period of the public key of the client to generate a private key of the client. Upon expiry of the public key of the client, the private key of the client expires accordingly. That is, the validity period of the public key is equivalent to the validity period of the private key of the client. After expiry of the validity period, the client needs to send a new client ID and a new validity period to the KGC to apply for a new private key.

The public key information of the client also includes the identifier of the client KGC. The identifier is a domain name address of the KGC. After obtaining the domain name address of the KGC, the server may visit the domain name address to obtain the public parameters of the KGC.

The client IBC parameters vary with the algorithm adopted in IBAKA. Supposing IBAKA adopts the Chen-Kudla algorithm, the client IBC parameters may be represented by $T_c$. To obtain $T_c$, the client needs to perform two steps beforehand:

1. The client needs to apply for a private key from the KGC, and the private key is within the validity period.
The client sends a client ID to the KGC. The client ID may be represented by $ID_c$. The KGC multiplies the Hash value of the client ID "$Q_c = H1(ID_c)$" by the master key "s" of the KGC, uses the product to generate a private key "Sc" of the client, and returns the private key to the client.
The private key "Sc" of the client may be expressed through the following formula:

$$S_C = sQ_C$$

2. The client obtains the public parameters of the server KGC.

The client IBC parameter "$T_c$" is a product of the random number "b" selected by the client and the Hash value "$Q_c = H1 (ID_c)$" of the client ID. Therefore, the client IBC parameter "$T_c$" is expressed through the following formula:

$$T_C = bQ_C.$$

By now, the server and the client have obtained the ID of the opposite party, the opposite IBC parameters, the public parameters shared by the server and the client, and respective private key. Subsequently, the client and the server may calculate out the master key according to the obtained parameters. In FIG. 2, steps 206-208 are a process of calculating the master key of the client, and steps 209-2011 are a process of calculating the master key of the server.

It is worthy of attention that in step 201, the client already obtains the server ID when sending information to the server. Therefore, the server_key_exchange message may carry the server ID that serves as a public key of the server or not.

Step 206: The client calculates the pre-shared key $K_C$ according to the private key "$S_C$" of the client, the server ID, the server IBC parameter "$T_S$" and the public parameters of the KGC. $K_C$ is expressed through the following formula:

$$K_C = e^{\wedge}(S_C, T_S + bQ_S)$$

$$T_S = aQ_S; S_C = sQ_{C;}$$

therefore,

$$K_C = e^{\wedge}(sQ_C, aQ_S + bQ_S) = e^{\wedge}(Q_C + Q_S)^{s(a+b)}$$

Step 209: The server calculates the pre-shared key $K_s$ according to the private key "$S_s$" of the server, the client ID, the client IBC parameter "$T_c$" and the public parameters of the KGC. $K_s$ is expressed through the following formula:

$$K_S = e^{\wedge}(S_S, T_C + aQ_C)$$

$$T_C = bQ_C; S_S = sQ_{S;}$$

therefore,

$$K_S = e^{\wedge}(sQ_S, bQ_C + aQ_C) = e^{\wedge}(Q_C + Q_S)^{s(a+b)}$$

Evidently, $K_C = K_S = K$. Therefore, after the client performs step 206 and the server performs step 209, both communication parties obtain the same pre-shared key "K".

Step 206 and step 209 are not sequence-sensitive. That is, step 206 may be performed before, during or after step 209.

Step 207: The client generates a pre-master key.

The pre-shared key "K" obtained in step 206 serves as a pre-master key directly. To prevent version rollback attacks, a 2-byte Client_Version may be added before "K" as a pre-master key. The Client_Version is the highest TLS version supported by the client.

Step 2010: The server generates a pre-master key.

The pre-shared key "K" obtained in step 209 may serve as a pre-master key directly. To prevent version rollback attacks, a 2-byte Client_Version may be added before "K" as a pre-master key. The Client_Version is the highest TLS version supported by the client. The server may obtain the Client_Version through the Client_Hello message obtained in step 201.

Step 207 and step 2010 are not sequence-sensitive. That is, step 207 may be performed before, during or after step 2010.

Step 208: The client generates a master key based on the pre-master key.

Step 2011: The server generates a master key based on the pre-master key.

Step 208 and step 2011 are not sequence-sensitive. That is, step 208 may be performed before, during or after step 2011.

In the first embodiment, the method for the client or the server to generate a master key based on a pre-master key is a universal algorithm in TLS for calculating the master key based on the pre-master key. This algorithm is as follows:

master_secret = PRF(pre_master_secret, "master secret", ClientHello.random + ServerHello.random)[0..47];

where ClientHello.random is a random number in the ClientHello message, and ServerHello.random is a random number in the ServerHello message. The length of the Master_secret is 48 bytes.

By now, both the client and the server have obtained the master key, and the key agreement is completed.

In this embodiment, the server_key_exchange message and the client_key_exchange message may be in the following format:

```
struct {
        select (KeyExchangeAlgorithm) {
                /* other cases for rsa, diffie_hellman, psk, etc. */
                case ibaka: /* NEW */
                        ibakaserverpara;
                         ServerPublicSecret;
                };
        } ServerKeyExchange;

   Struct {
        String<0..1024> ServerIdentity;
        ValidityPeriod;
        string<0..1024> Serverkgc;
      } ServerPublicSecret;
   Struct ValidityPeriod {
                    Uint32 notBefore;
                    Uint32 notAfter;
                     }

   struct {
        select (KeyExchangeAlgorithm) {
                /* other cases for rsa, diffie_hellman, psk, etc. */
                case ibaka: /* NEW */
                    ibakaclientpara;
                     ClientPublicSecret;
                } exchange_keys;
        } ClientKeyExchange;
```

where "ibakaserverpara" represents the server IBC parameters; "ServerPublicSecret" represents the public key information of the server; "String<0..1024>ServerIdentity" represents the server ID; "ValidityPeriod" represents the validity period of the public key; "String<0..1024>Serverkgc" represents the address of the server KGC; "ibakaclientpara" represents the client IBC parameters; and "ClientPublicSecret" represents the public key information of the client.

The ibakaserverpara and ibakaclientpara parameters vary with the algorithm such as the Chen-Kudla algorithm and the Smart-Chen-Kudla algorithm. The foregoing description takes the Chen-Kudla algorithm as an example. The parameters of both parties are defined below, taking the BF algorithm as an example:

```
    struct {
        opaque AlgObjectId;
         opaque t_s<0..2^16-1>;
        } ibakaServerParams;
    struct {
         opaque AlgObjectId;
        opaque t_c<1..2^16-1>;
          } ibakaClientParams;
```

where "opaque AlgObjectId" represents the algorithm ID, and "opaque" means that the IBC parameter is binary, and its length ranges from 0 bit to (2^16-1) bits.

Through the key agreement method provided in the first embodiment of the present invention, IBC uses the user ID as a public key of the user. Therefore, it is not necessary to use a certificate to bind the user ID to the public key of the user, and it is not necessary to depend on the certificate-based authentication. The certificate-based authentication steps are not required, and the key agreement process is simplified. The storage and processor resources are saved, especially for the mobile terminal which has a limited processing capability and the mobile network which provides a limited transmission speed. Moreover, the identity of the opposite party is authenticated in the key agreement process, and the authentication effectively prevents man-in-the-middle attacks and ensures the system security. Because no special setting is required, the method is widely applicable.

The second embodiment of the key agreement method under the present invention takes IBS as an example to describe the key agreement process.

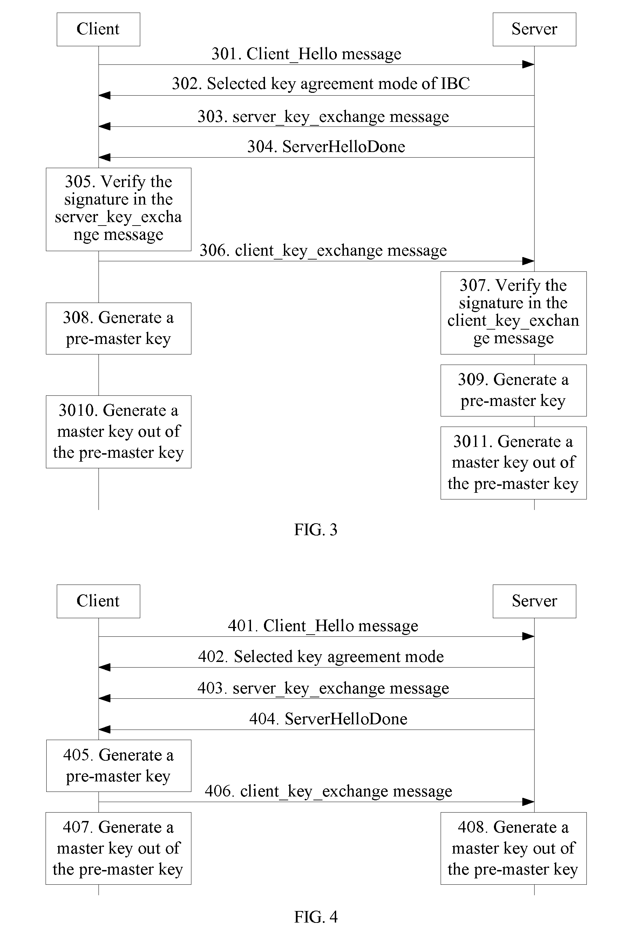

The specific process of using IBS to implement key agreement comes in many types. FIG. 3 shows an exemplary process of the key agreement method provided in the second embodiment of the present invention, supposing IBS is used to protect the DH parameters:

Step 301: The client initiates a session by sending a Client_Hello message to the server.

The parameters carried in the Client_Hello message include: highest TLS/SSL version supported by the client, random number, session identifier, supported CipherSuite list, and supported compression method list.

If the client supports IBS and expects to perform key agreement in IBS mode, a CipherSuite based on IBS is set to be of the highest priority, namely, placed at the forepart of the CipherSuite list.

The client may support many key agreement modes. Sometimes exceptions may occur; for example, the server does not support the IBS mode, and another mode needs to be selected. The client needs to set priority for each supported key agreement mode so that the server may select the key agreement mode most desired by the client.

The second embodiment supposes that IBS is used to protect the DH parameters, and that the applied algorithm is Hess. Therefore, the key agreement method may be marked as the CipherSuite of DHE_IBS_Hs and placed at the forepart of the CipherSuite list of the Client_Hello message.

Step 302: The server selects a key agreement mode, and sends it to the client.

After receiving the Client_Hello message, the server selects the CipherSuite which is supported by the server and is of the highest priority from the CipherSuite list provided in the Client_Hello message. In this embodiment, the selected CipherSuite is a CipherSuite based on IBS, for example, TLS_DHE_IBS_Hs_WITH_3DES_EDE_CBC_SHA. Afterward, the selected CipherSuite is sent to the client. Once the CipherSuite based on IBS is selected, the key agreement is performed in IBS mode.

In step 301 and step 302, the client and the server finish the security capability negotiation, and select the DHE_IBS_Hs mode for key agreement.

Step 303: The server sends a server_key_exchange message to the client. The message carries the DH public parameters of the server, the signature generated with the IBS algorithm to the DH public parameters, and the public key information of the server.

The public key information of the server includes the public key of the server, namely, the server ID, and may also include the validity period of the public key of the server and the address of the server KGC. The validity period controls the validity of the public key of the server. When this validity period expires, a new public key of the server (namely, a new server ID) needs to be used. After receiving the validity period of the public key of the server, the client judges whether the received public key has expired by checking expiry of this validity period.

Meanwhile, the private key of the server is generated by the KGC by using the public key of the server. If the validity period of the public key of the server is set, the KGC uses the public key of the server and the validity period of the public key of the server to generate a private key of the server. Upon expiry of the public key of the server, the private key of the server expires accordingly. That is, the validity period of the public key is equivalent to the validity period of the private key of the server. After expiry of the validity period, if a new public key of the server is used, the server needs to send a new server ID and a new validity period to the KGC to apply for a new private key.

After receiving the validity period of the public key of the server, the client judges whether the received public key has expired by checking expiry of this validity period.

In the second embodiment of the present invention, the server KGC is the KGC that generates the private key for the server, and the client KGC is the KGC that generates the private key for the client. The server KGC may assume the role of the client KGC concurrently, or is different from the client KGC. If the server KGC is different from the client KGC and the client does not know the server KGC address, the server KGC address needs to be sent to the client in this step.

Besides, the client can send a Client_Hello message to the server, indicating that the client knows the server ID (namely, knows the public key of the server). Therefore, the message may carry the server ID information or not.

The server signs the DH public parameters with the IBS algorithm in this way: The DH public parameters are encrypted through the private key of the server and the public parameters of the server KGC. Therefore, before this step, the server needs to finish two steps:

1. The server needs to apply for a private key from the server KGC, and the private key is within the validity period.
2. The server obtains the public parameters of the server KGC.

Step 1 and step 2 may be performed with reference to step 203 of the first embodiment, and are not further described.

Step 1 and step 2 may be performed before step 303 after start of this process, or performed before start of this process, for example, performed at the previous key agreement of the server.

In the second embodiment, the IBS algorithm used when the server signs the DH public parameters is Hess, and the format of the server_key_exchange message may be defined as follows:

```
struct {
    select (KeyExchangeAlgorithm) {
        case dhe_ibs:
            ServerDHParams params;
            Signature signed_params;
              ServerPublicSecret;
        };
    } ServerKeyExchange;
```

where ServerDHParams represents the DH public parameters of the server.

Signature means that the DH public parameters of the server are signed through the IBS algorithm. If the Hess algorithm is applied, the signature process is as follows:

$$ r = e^{\wedge}(P1, P)^k, \quad v = H2(m, r); \quad u = vS_S + kP1, $$

where P1 is an element selected by the server randomly in a group G1; k is a random number selected by the server randomly; m is a signed message. In this embodiment, m represents the DH public parameters of the server; v and u are signature values, as defined below:

```
struct {
    select (SignatureAlgorithm) {
        case ibs-hs:
            digitally-signed struct {
                opaque hs_v<1..2^16-1>;
                opaque hs_u<1..2^16-1>;
            };
        };
    } Signature;
```

where hs_v<1..2^16-1> and hs_u<1..2^16-1> are two values after the signature operation in the Hess algorithm.

Step 304: The server sends a ServerHelloDone message to the client, indicating completion of sending the message of the server part. This message carries no parameter. The server waits for a response from the client after sending this message.

Step 305: The client verifies the signature in the server_key_exchange message.

After receiving the server_key_exchange message, the client verifies the signature carried in the message and generated with IBS to the parameters. Before verification, the client needs to obtain the public parameters of the server KGC and the public key of the server. The public parameters of the server KGC are generally obtained from the server KGC according to the server KGC address.

The server KGC may assume the role of the client KGC concurrently, or is different from the client KGC. If the server KGC is different from the client KGC, the client may be unaware of the server KGC address. The client may obtain the server KGC address from the server_key_exchange message in this step or at the previous key agreement with the server before this process.

Likewise, the public parameters of the server KGC may be obtained in this step, or before this process, for example, at the previous key agreement with the server.

The client verifies the signature in the server_key_exchange message in the following process:

With known message m (namely, DH public parameters of the server) and signature (v, u), r = e^(u, P) * e^(Qs, Ppub)$^v$ is calculated.

If v = H2 (m, r), the verification succeeds.

If the verification succeeds, it indicates that the DH public parameters of the server are not replaced or altered and the server identity is authentic. That is, the server has been authenticated.

Because the server is authenticated in this step, the man-in-the-middle attacks are prevented.

Step 306: The client sends a client_key_exchange message to the server.

The client_key_exchange message carries the DH public parameters of the client.

The client_key_exchange message may also carry the signature generated with the IBS algorithm to the DH public parameters, and carry the public key information of the client. Therefore, when the server needs to authenticate the client, the server may verify the signature to confirm the identity of the client. The signature mode is to encrypt the DH public parameters by using the private key of the client and the public parameters of the client KGC. If the server does not need to authenticate the client, the client_key_exchange message does not need to carry the signature for the DH parameters. If the client_key_exchange message carries the signature generated with the IBS algorithm to the DH parameters, the client_key_exchange message may be defined as follows:

```
struct {
    select (KeyExchangeAlgorithm) {
        case diffie_hellman_ibs:
            ClientDHParams public;
            Signature signed_params;
    ClientPublicSecret;
        };
} ClientKeyExchange;
```

where ClientDHParams represents the DH public parameters of the client.

"Signature" represents the signature generated with the IBS algorithm to the DH public parameters of the client. The signature may be affixed with reference to step 303, and is not further described herein.

Step 305 and step 306 are not sequence-sensitive. That is, step 305 may be performed before, during or after step 306.

Step 307: The server verifies the signature in the client_key_exchange message.

If the client_key_exchange message sent in step 306 carries the signature generated with the IBS algorithm to the DH parameters, the server verifies the signature. If the verification succeeds, it indicates that the DH public parameters of the client are not replaced or altered and the identity of the client is authentic. That is, the client is authenticated, thus preventing man-in-the-middle attacks.

If the server does not need to authenticate the client, step 307 is not required.

By now, the server and the client have obtained the DH public parameters of the opposite party.

Step 308: The client generates a DH pre-shared key through the Diffie-Hellmon algorithm according to the DH public parameters of the server and the DH private parameters of the client, thus obtaining a pre-master key. The client may obtain the pre-master key from the pre-shared key with reference to relevant description in the first embodiment.

Step 309: The server generates a DH pre-shared key through the Diffie-Hellmon algorithm according to the DH public parameters of the client and the DH private parameters of the server, thus obtaining a pre-master key. The server may obtain the pre-master key from the pre-shared key with reference to relevant description in the first embodiment.

Step 308 and step 309 are not sequence-sensitive. That is, step 308 may be performed before, during or after step 309. The client and the server generate the same DH pre-shared key according to their own DH private parameters and the DH public parameters of the opposite party in step 308 and step 309.

Step 3010: The client generates a master key based on the pre-master key.

Step 3011: The server generates a master key based on the pre-master key.

The method for the client or the server to generate a master key based on a pre-master key is a universal algorithm in TLS for calculating the master key based on the pre-master key. The method has been described in the first embodiment and will not be further described herein.

By now, the key agreement has been completed.

Therefore, in the key agreement method provided in the second embodiment of the present invention, the DH parameters are protected through the IBS algorithm so that both communication parties may authenticate the opposite party, thus preventing man-in-the-middle attacks and improving the system security significantly. Likewise, the key agreement method provided in the second embodiment of the present invention depends on no certificate-based authentication, avoids the complicated certificate-related steps, saves the network resources, requires no special setting, and is widely applicable.

Likewise, the key agreement method provided in the second embodiment of the present invention depends on no certificate-based authentication, avoids the complicated certificate-related steps, requires no special setting, and is widely applicable.

The third embodiment of the key agreement method under the present invention takes IBS as an example to describe the key agreement process. As shown in FIG. 4, the process of the key agreement method in the third embodiment includes the following steps:

Step 401: The client initiates a session by sending a Client_Hello message to the server.

The parameters carried in the Client_Hello message include: highest TLS/SSL version supported by the client, random number, session identifier, supported CipherSuite list, and supported compression method list.

If the client supports IBE and expects to perform key agreement in IBE mode, a CipherSuite based on IBE is set to be of the highest priority, namely, placed at the forepart of the CipherSuite list.

The client may support many key agreement modes. Sometimes exceptions may occur; for example, the server does not support the IBE mode, and another mode needs to be selected. The client needs to set priority for each supported key agreement mode so that the server may select the key agreement mode most desired by the client.

This embodiment supposes that IBE is applied, and that the applied algorithm is Boneh-Franklin. Therefore, the key agreement method may be marked as the CipherSuite of IBE_BF and placed at the forepart of the CipherSuite list of the Client_Hello message.

Step 402: The server selects a key agreement mode, and sends it to the client.

After receiving the Client_Hello message, the server selects the CipherSuite which is supported by the server and is of the highest priority from the CipherSuite list provided in the Client_Hello message. In the third embodiment, the selected CipherSuite is a CipherSuite based on IBE, for example, TLS_IBE_BF_WITH_AES_128_CBC_SHA. Afterward, the selected CipherSuite is sent to the client. Once the CipherSuite based on IBE is selected, the key agreement is performed in IBE mode.

In step 401 and step 402, the client and the server finish the security capability negotiation, and select the IBE_BF mode for key agreement.

Step 403: The server sends a server_key_exchange message to the client. The message carries the public key information of the server.

The public key information of the server includes the public key of the server, namely, the server ID, and may also include the validity period of the public key of the server and the address of the server KGC. The validity period of the public key of the server controls the validity of the public key of the server. When this validity period expires, a new public key of the server (namely, a new server ID) needs to be used. After receiving the validity period of the public key of the server, the client judges whether the received public key has expired by checking expiry of this validity period.

Meanwhile, the private key of the server is generated by the KGC by using the public key of the server. If the validity period of the public key of the server is set, the KGC uses the public key of the server and the validity period of the public key of the server to generate a private key of the server. Upon expiry of the public key of the server, the private key of the server expires accordingly. That is, the validity period of the public key is equivalent to the validity period of the private key of the server. After expiry of the validity period, if a new public key of the server is used, the server needs to send a new server ID and a new validity period to the KGC to apply for a new private key.

In the third embodiment of the present invention, the server KGC is the KGC that generates the private key for the server, and the client KGC is the KGC that generates the private key for the client. The server KGC may assume the role of the client KGC concurrently, or is different from the client KGC. If the server KGC is different from the client KGC and the client does not know the server KGC address, the server KGC address needs to be sent to the client in this step.

Besides, the client can send a Client_Hello message to the server, indicating that the client knows the server ID (namely, knows the public key of the server). Therefore, the message may carry the server ID information or not.

The server_key_exchange message may be defined as follows:

```
        struct {
            select (KeyExchangeAlgorithm) {
                case ibe_bf:
                    ServerPublicSecret;
            };
        } ServerKeyExchange;

    Struct {
        String<0..1024> ServerIdentity;
        ValidityPeriod;
        string<0..1024> Serverkgc; //Address of the server KGC
    } ServerPublicSecret;

        Struct ValidityPeriod {
```

```
Uint32 notBefore;
Uint32 notAfter;
}
```

where "ServerIdentity" is the server ID; "ValidityPeriod" is the validity period of the public key; and "string<0..1024> Serverkgc" is the server KGC address.

Step 404: The server sends a ServerHelloDone message to the client, indicating completion of sending the message of the server part. This message carries no parameter. The server waits for a response from the client after sending this message.

Step 405: The client generates a pre-master key according to the TLS protocol in the prior art.

Step 406: The client sends a client_key_exchange message to the server.

The client obtains the public parameters of the server KGC from the server KGC according to the server KGC address, and uses the public parameters of the server KGC, the public key of the server, and the control parameter selected by the client to encrypt the pre-master key. The encrypted pre-master key is carried in the client_key_exchange message and sent to the server.

The client_key_exchange message may also carry the public key of the server and the control parameter. The control parameter may be the validity period of the public key of the server as described in step 403, or the validity period of the public key of the server as specified by the client. If the control parameter is the validity period of the public key of the server as specified by the client, the client_key_exchange message needs to carry the control parameter.

In this case, the client_key_exchange message may be defined as follows:

```
struct {
    select (KeyExchangeAlgorithm) {
        case ibe_bf: IbeEncryptedPreMasterSecret;
    } exchange_keys;
} ClientKeyExchange;

struct {
    public-key-encrypted PreMasterSecret pre_master_secret;
} EncryptedPreMasterSecret;
```

Step 407: The client generates a master key with the pre-master key according to the TLS protocol.

Step 406 and step 407 are not sequence-sensitive. That is, step 208 may be performed before, during or after step 2011.

Step 408: The server uses the public parameters of the server KGC, the public key of the server, and the control parameter to decrypt the received encrypted pre-master key and obtain the pre-master key, and then generates a master key with the pre-master key according to the TLS protocol.

The method for the client or the server to generate a master key with a pre-master key is a universal algorithm in TLS for calculating the master key based on the pre-master key. The method has been described in the first embodiment and will not be further described herein.

By now, the key agreement has been completed.

Therefore, in the key agreement method provided in the third embodiment of the present invention, it is not necessary to deploy a pre-shared key known by both communication parties involved in the key agreement at both sides. Instead, the client generates a pre-master key and sends it to the server; the client and the server generate a master key according to the pre-master key to finish the key agreement, and use the public parameters of the server KGC, the public key of the server and the control parameter to protect the transmission process of the pre-master key. Therefore, the key agreement process is secure, reliable, easily practicable, free from restriction of the application environment, and widely applicable. It is not necessary to use the pre-shared key known by both communication parties, thus preventing one party from denying a performed action and avoiding the non-repudiation problem. Likewise, the key agreement method provided in the third embodiment of the present invention depends on no certificate-based authentication, avoids the complicated certificate-related steps, and saves the network resources.

Likewise, the key agreement method provided in the third embodiment of the present invention depends on no certificate-based authentication, and avoids the complicated certificate-related steps.

It is understandable to those skilled in the art that all or part of the steps of the foregoing embodiments may be implemented by hardware instructed by a program. The program may be stored in a computer-readable storage medium. When being executed, the program performs the following steps:

sending a Client_Hello message that carries a CipherSuite list to a server, and initiating a session, where the CipherSuite list includes CipherSuites of a key agreement mode of IBC;

receiving information about a selection of the key agreement mode of IBC from the server;
receiving a server_key_exchange message sent by the server;
receiving a ServerHelloDone message sent by the server;
obtaining a master key; and
sending a client_key_exchange message to the server so that the server can obtain a master key through information carried in the client_key_exchange message.

Alternatively, the program performs the following steps:

receiving a Client_Hello message that is sent by a client and carries a CipherSuite list, where the CipherSuite list includes CipherSuites of a key agreement mode of IBC;
selecting a CipherSuite of the key agreement mode of IBC from the CipherSuite list, and sending the selected CipherSuite to the client;
sending a server_key_exchange message to the client;
sending a ServerHelloDone message to the client;
receiving a client_key_exchange message sent by the client; and
obtaining a master key according to information carried in the client_key_exchange message.

The aforementioned storage media may be a Read-Only Memory (ROM), a magnetic disk, or a compact disk.

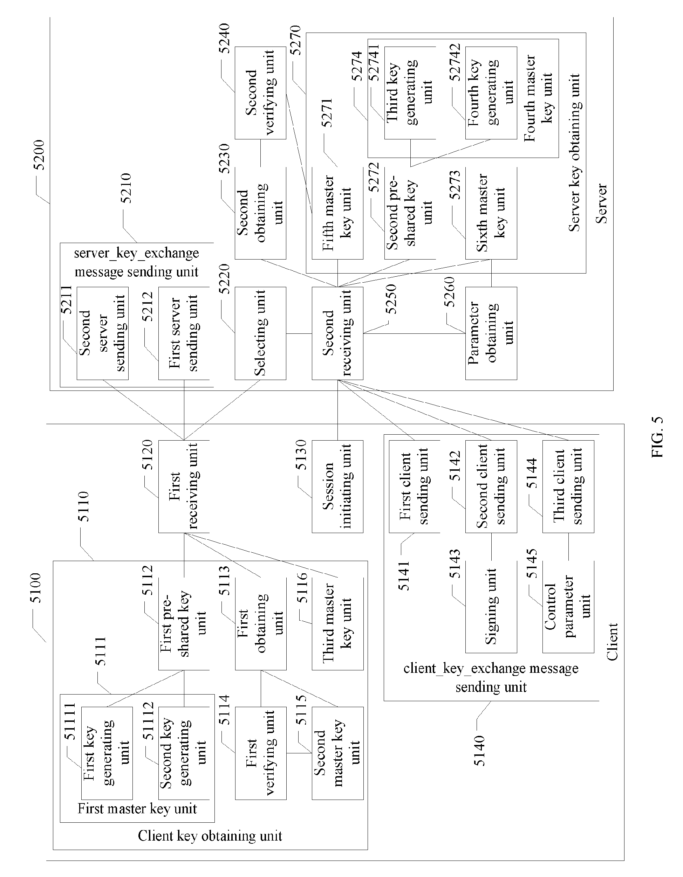

FIG. 5 shows a structure of a key agreement system provided in an embodiment of the present invention. The key agreement system includes:

a client 5100, adapted to: send a Client_Hello message that carries a CipherSuite list, where the CipherSuite list includes CipherSuites of a key agreement mode of IBC; receive information about a selection of the key agreement mode of IBC from the server 5200; receive a server_key_exchange message; receive a ServerHelloDone message; obtain a master key; and send a client_key_exchange message; and
a server 5200, adapted to: receive the Client_Hello message sent by the client; select a CipherSuite of the key agreement mode of IBC from the CipherSuite list, and send the selected CipherSuite to the client; send the server_key_exchange message to the client; receive the client_key_exchange message sent by the client; send the Server-HelloDone message to the client; and obtain a master key according to the information carried in the client_key_exchange message.

The client 5100 in the system further includes:

a session initiating unit 5130, adapted to: send a Client_Hello message that carries a CipherSuite list to the server 5200, and initiate a session, where the CipherSuite list includes CipherSuites of a key agreement mode of IBC;
a client_key_exchange message sending unit 5140, adapted to: send a client_key_exchange message to the server 5200 so that the server 5200 can obtain the master key through the information carried in the client_key_exchange message;
a first receiving unit 5120, adapted to: receive the information about a selection of the key agreement mode of IBC from the server 5200; receive a server_key_exchange message sent by the server 5200; and receive a ServerHelloDone message sent by the server; and
a client key obtaining unit 5110, adapted to obtain the master key according to the information received by the first receiving unit 5120.

The client key obtaining unit 5110 in the client 5100 further includes:

a first pre-shared key unit 5112, adapted to: obtain the IBC parameters of the server 5200 from the server_key_exchange message; and obtain a pre-shared key according to the IBC algorithm by using the obtained public parameters of the KGC, private key of the client, IBC parameters of the server 5200, and the server identity serving as a public key of the server;
a first master key unit 5111, adapted to obtain the master key based on the pre-shared key;
a first obtaining unit 5113, adapted to obtain the Diffie-Hellman public parameters of the server 5200 from the key exchange message, and the signature generated with the private key of the server to the public parameters;
a first verifying unit 5114, adapted to verify the signature generated with the IBC algorithm to the Diffie-Hellman public parameters of the server by using obtained public parameters of the KGC and the server identity that serves as a public key of the server;
a second master key unit 5115, adapted to: generate a Diffie-Hellman pre-shared key by using the Diffie-Hellman public parameters of the server 5200 and the Diffie-Hellman public parameters of the client 5100, use the Diffie-Hellman pre-shared key as a pre-master key, and generate the master key according to the pre-master key; and a third master key unit 5116, adapted to: generate a pre-master key according to the TLS protocol, and generate the master key according to the pre-master key.

The first master key unit 5111 in the client key obtaining unit 5110 further includes:

a first key generating unit 51111, adapted to: use the pre-shared key as a pre-master key, and generate the master key according to the pre-master key; and

a second key generating unit 51112, adapted to: use the pre-shared key and the client version as a pre-master key, and generate the master key according to the pre-master key.

The client_key_exchange message sending unit 5140 in the client 5100 further includes:

a first client sending unit 5141, adapted to send a client_key_exchange message carrying the IBC parameters of the client 5100 to the server 5200;

a second client sending unit 5142, adapted to send a client_key_exchange message carrying the Diffie-Hellman public parameters of the client 5100 to the server 5200;

a signing unit 5143, adapted to generate a signature with the IBC to the Diffie-Hellman public parameters of the client 5100 in the client_key_exchange message;

a third client sending unit 5144, adapted to: encrypt the pre-master key by using the obtained public parameters of the server KGC, the server identity serving as the public key of the server, and the control parameter selected by the client, and carry the pre-master key in the client_key_exchange message to the server 5200; and

a control parameter unit 5145, adapted to: generate the control parameter, and carry the control parameter in the client_key_exchange message to the server 5200.

The server 5200 in the system further includes:

a second receiving unit 5250, adapted to: receive the Client_Hello message that is sent by the client 5100 and carries a CipherSuite list; and receive the client_key_exchange message sent by the client 5100;

a selecting unit 5220, adapted to: select a CipherSuite of the key agreement mode of IBC from the CipherSuite list, and send the selected CipherSuite to the client 5100;

a server_key_exchange message sending unit 5210, adapted to send the server_key_exchange message to the client 5100;

a ServerHelloDone message sending unit, adapted to send the ServerHelloDone message to the client 5100;

a server key obtaining unit 5270, adapted to: obtain the master key according to the information carried in the client_key_exchange message, and finish the key agreement;

a second obtaining unit 5230, adapted to obtain the signature generated with IBC to the Diffie-Hellman public parameters of the client 5100 from the client_key_exchange message;

a second verifying unit 5240, adapted to: verify the signature generated with IBC to the Diffie-Hellman public parameters of the client 5100 by using the obtained public parameters of the client KGC and the client identity serving as a public key of the client; if the verification succeeds, let a fifth master key unit 5271 use the Diffie-Hellman public parameters of the server 5200 and the Diffie-Hellman public parameters of the client 5100 to generate a Diffie-Hellman pre-shared key;

a parameter obtaining unit 5260, adapted to obtain the control parameter from the key exchange message.

The key obtaining unit 5270 in the server 5200 further includes:

a second pre-shared key unit 5272, adapted to: obtain the IBC parameters of the client 5100 from the key exchange message, and the client identity of the public key of the client; and obtain a pre-shared key according to the IBC algorithm by using the obtained public parameters of the KGC, private key of the server, IBC parameters of the client 5100, and the client identity;

a fourth master key unit 5274, adapted to obtain the master key based on the pre-shared key;

a fifth master key unit 5271, adapted to: obtain Diffie-Hellman public parameters of the client 5100 from the key exchange message; generate a Diffie-Hellman pre-shared key by using the Diffie-Hellman public parameters of the server 5200 and the Diffie-Hellman public parameters of the client 5100, use the Diffie-Hellman pre-shared key as a pre-master key, and generate the master key according to the pre-master key; and

a sixth master key unit 5273, adapted to: obtain an encrypted pre-master key from the key exchange message;

decrypt the pre-master key to obtain a decrypted pre-master key by using the public parameters of the server KGC, the server identity serving as a public key of the server, and the control parameter selected by the client, and generate the master key according to the pre-master key.

The fourth master key unit 5274 in the server key obtaining unit 5270 further includes:

a third key generating unit 52741, adapted to: use the pre-shared key as a pre-master key, and generate the master key according to the pre-master key; and
a fourth key generating unit 52742, adapted to: use the pre-shared key and the client version as a pre-master key, and generate the master key according to the pre-master key.

The server_key_exchange message sending unit 5210 in the server 5200 further includes:

a first server sending unit 5211, adapted to send a server_key_exchange message carrying the IBC parameters of the server to the client 5100; and
a second server sending unit 5212, adapted to send the server_key_exchange message carrying the Diffie-Hellman public parameters of the server 5200 and the signature generated with IBC to the public parameters of the server to the client 5100.

The client provided in an embodiment is almost the same as the client 5100 described in the embodiment of the key agreement system under the present invention, and is not described further.
The server provided in an embodiment is almost the same as the server 5200 described in the embodiment of the key agreement system under the present invention, and is not described further.
As regards the working modes of the key agreement system, the client, and the server provided in the embodiments of the present invention, the key agreement method described in the foregoing embodiments may serve as a reference. The specific working modes are not described further.
According to the foregoing embodiments, those skilled in the art are clearly aware that the present invention may be implemented through hardware or through software plus a necessary universal hardware platform. Therefore, the technical solution of the present invention may be embodied as software. The software may be stored in a non-volatile memory (such as a CD-ROM, a USB flash disk, or a mobile hard disk), and may include several instructions so that one computer device (such as a personal computer, a server, or a network device) performs the methods provided by each embodiment of the present invention.
Detailed above are a key agreement method, a key agreement system, a client, and a server provided in the embodiments of the present invention. Although the invention is described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

**Claims**

1.  A key agreement method, comprising:

sending a Client_Hello message that carries a CipherSuite list to a server, and initiating a session, wherein the CipherSuite list comprises CipherSuites of a key agreement mode of Identity-Based Cryptography (IBC);
receiving information about a selection of the key agreement mode of IBC from the server;
receiving a server_key_exchange message sent by the server;
receiving a ServerHelloDone message sent by the server;
obtaining a master key; and
sending a client_key_exchange message to the server so that the server can obtain a master key through information carried in the client_key_exchange message.

2.  The key agreement method of claim 1, wherein:

the key agreement mode of IBC is a key agreement mode of Identity-Based Authentication and Key Agreement (IBAKA);
the sending of the client_key_exchange message to the server comprises: sending the client_key_exchange

18

message carrying IBC parameters of the client and a public key of the client to the server; and
the obtaining of the master key comprises: obtaining IBC parameters of the server from the server_key_exchange message; obtaining a pre-shared key according to the IBC algorithm by using obtained public parameters of a Key Generation Center (KGC), a private key of the client, the IBC parameters of the server, and the public key of the server; and obtaining the master key according to the pre-shared key.

3. The key agreement method of claim 2, wherein the obtaining of the master key according to the pre-shared key comprises:

using the pre-shared key as a pre-master key, and generating the master key according to the pre-master key.

4. The key agreement method of claim 2, wherein the obtaining of the master key according to the pre-shared key comprises:

using the pre-shared key and a client version as the pre-master key, and generating the master key according to the pre-master key.

5. The key agreement method of claim 2, claim 3, or claim 4, further comprising:

carrying a validity period of the public key of the client in the client_key_exchange message so that the server can judge whether the public key of the client expires through the validity period.

6. The key agreement method of claim 1, wherein:

the key agreement mode of IBC is a key agreement mode of Identity-Based Signature (IBS);
the sending of the client_key_exchange message to the server comprises: sending the client_key_exchange message carrying Diffie-Hellman public parameters of the client to the server; and
the obtaining of the master key comprises: obtaining the Diffie-Hellman public parameters of the server and a signature generated with IBS to the Diffie-Hellman public parameters of the server from the server_key_exchange message; verifying the signature generated with IBS to the Diffie-Hellman public parameters in the server_key_exchange message according to obtained public parameters of a server Key Generation Center (KGC), and a public key of the server; generating a Diffie-Hellman pre-shared key by using the Diffie-Hellman public parameters of the server and Diffie-Hellman private parameters of the client, if the verification succeeds; and generating the master key based on the Diffie-Hellman pre-shared key.

7. The key agreement method of claim 6, further comprising:

affixing the signature to the Diffie-Hellman public parameters of the client through IBS, and carrying the signature in the client_key_exchange message so that the server can authenticate the client.

8. The key agreement method of claim 1, wherein:

the key agreement mode of IBC is a key agreement mode of Identity-Based Encryption (IBE);
the obtaining of the master key comprises: generating a pre-master key, and
generating the master key according to the pre-master key; and
the sending of the client_key_exchange message to the server comprises: encrypting the pre-master key by using obtained public parameters of a server Key Generation Center (KGC), a public key of the server, and a control parameter selected by the client; and sending the client_key_exchange message carrying the pre-master key to the server.

9. The key agreement method of claim 8, further comprising:

sending the client_key_exchange message carrying the control parameter to the server.

10. A key agreement method, comprising:

receiving a Client_Hello message that is sent by a client and carries a CipherSuite list, wherein the CipherSuite list comprises CipherSuites of a key agreement mode of Identity-Based Cryptography (IBC);

selecting a CipherSuite of the key agreement mode of IBC from the CipherSuite list, and sending the selected CipherSuite to the client;
sending a server_key_exchange message to the client;
sending a ServerHelloDone message to the client;
receiving a client_key_exchange message sent by the client; and
obtaining a master key according to information carried in the client_key_exchange message.

11. The key agreement method of claim 10, wherein:

the key agreement mode of IBC is a key agreement mode of Identity-Based Authentication and Key Agreement (IBAKA);
the sending of the server_key_exchange message to the client comprises: sending the server_key_exchange message carrying IBC parameters of the server to the client; and
the obtaining of the master key according to the information carried in the client_key_exchange message comprises: obtaining IBC parameters of the client and a public key of the client from the client_key_exchange message;obtaining a pre-shared key according to obtained public parameters of a Key Generation Center (KGC), a private key of the server, the IBC parameters of the client, and the public key of the client; and obtaining the master key according to the pre-shared key.

12. The key agreement method of claim 11, wherein the obtaining of the master key according to the pre-shared key comprises:

using the pre-shared key as a pre-master key, and generating the master key according to the pre-master key.

13. The key agreement method of claim 11, wherein the obtaining of the master key according to the pre-shared key comprises:

using the pre-shared key and a client version as the pre-master key, and generating the master key according to the pre-master key.

14. The key agreement method of claim 10, wherein:

the key agreement mode of IBC is a key agreement mode of Identity-Based Signature (IBS);
the sending of the server_key_exchange message to the client comprises: sending the server_key_exchange message carrying Diffie-Hellman public parameters of the server and a signature generated with IBS to the public parameters of the server to the client; and
the obtaining of the master key according to the information carried in the client_key_exchange message comprises: obtaining the Diffie-Hellman public parameters of the client from the client_key_exchange message; generating a Diffie-Hellman pre-shared key by using the Diffie-Hellman public parameters of the client and Diffie-Hellman private parameters of the server, and generating the master key based on the Diffie-Hellman pre-shared key.

15. The key agreement method of claim 14, further comprising:

obtaining a signature generated with the IBS to the Diffie-Hellman public parameters of the client from the client_ key_exchange message;
verifying the signature generated with the IB S to the Diffie-Hellman public parameters of the client in the client_ key_exchange message according to obtained public parameters of a client Key Generation Center (KGC), and a public key of the client; and if the verification succeeds, generating the Diffie-Hellman pre-shared key.

16. The key agreement method of claim 10, wherein:

the key agreement mode of IBC is a key agreement mode of Identity-Based Encryption (IBE); and
the obtaining of the master key according to the information carried in the client_key_exchange message comprises: obtaining an encrypted pre-master key from the client_key_exchange message; decrypting the encrypted pre-master key to obtain a decrypted pre-master key by using obtained public parameters of a server Key Generation Center (KGC), a public key of the server, and a control parameter selected by the client; and generating the master key according to the pre-master key.

**17.** The key agreement method of any of claims 10-16, further comprising:

carrying a validity period of the public key of the server in the server_key_exchange message so that the client can judge whether the public key of the server expires through the validity period.

**18.** A key agreement system, comprising:

a client, adapted to: send a Client_Hello message that carries a CipherSuite list, wherein the CipherSuite list comprises CipherSuites of a key agreement mode of Identity-Based Cryptography (IBC); receive information about a selection of the key agreement mode of IBC; receive a server_key_exchange message; receive a ServerHelloDone message; obtain a master key; and send a client_key_exchange message; and
a server, adapted to: receive the Client_Hello message sent by the client; select a CipherSuite of the key agreement mode of IBC from the CipherSuite list, and send the selected CipherSuite to the client; send the server_key_exchange message to the client; receive the client_key_exchange message sent by the client; send the ServerHelloDone message to the client; and obtain a master key according to the information carried in the client_key_exchange message.

**19.** A client, comprising:

a session initiating unit, adapted to: send a Client_Hello message that carries a CipherSuite list to a server, and initiate a session, wherein the CipherSuite list comprises CipherSuites of a key agreement mode of Identity-Based Cryptography (IBC);
a client_key_exchange message sending unit, adapted to: send a client_key_exchange message to the server so that the server can obtain a master key through information carried in the client_key_exchange message;
a first receiving unit, adapted to: receive information about a selection of the key agreement mode of IBC from the server; receive a server_key_exchange message sent by the server; and receive a ServerHelloDone message sent by the server; and
a client key obtaining unit, adapted to obtain a master key according to the information received by the first receiving unit.

**20.** The client of claim 19, wherein:

the client key obtaining unit further comprises:

a first pre-shared key unit, adapted to: obtain IBC parameters of the server from the server_key_exchange message; and obtain a pre-shared key according to the IBC algorithm by using obtained public parameters of a Key Generation Center (KGC), a private key of the client, the IBC parameters of the server, and a public key of the server; and
a first master key unit, adapted to obtain the master key based on the pre-shared key; and
the client_key_exchange message sending unit further comprises:

a first client sending unit, adapted to send the client_key_exchange message to the server, wherein the client_key_exchange message carries the IBC parameters of the client and the public key of the client.

**21.** The client of claim 19, wherein:

the client key obtaining unit further comprises:

a first obtaining unit, adapted to obtain Diffie-Hellman public parameters of the server and a signature generated with Identity-Based Signature (IBS) to the Diffie-Hellman public parameters of the server from the server_key_exchange message;
a first verifying unit, adapted to verify the signature generated with IBS to the Diffie-Hellman public parameters of the server according to obtained public parameters of a server Key Generation Center (KGC), and a public key of the server; and
a second master key unit, adapted to: generate a Diffie-Hellman pre-shared key by using the Diffie-Hellman public parameters of the server as well as Diffie-Hellman public parameters and private parameters of the client if the verification performed by the first verifying unit succeeds, and generate the master key based

21

on the Diffie-Hellman pre-shared key; and
the client_key_exchange message sending unit further comprises:

a second client sending unit, adapted to send the client_key_exchange message carrying the Diffie-Hellman public parameters of the client to the server.

**22.** The client of claim 21, wherein the client_key_exchange message sending unit further comprises:

a signing unit, adapted to: affix a signature through IBS to the Diffie-Hellman public parameters of the client in the client_key_exchange message.

**23.** The client of claim 19, wherein:

the client key obtaining unit comprises:

a third master key unit, adapted to: generate a pre-master key, and generate the master key according to the pre-master key; and
the client_key_exchange message sending unit comprises:

a third client sending unit, adapted to: encrypt the pre-master key by using obtained public parameters of a server Key Generation Center (KGC), a public key of the server, and a control parameter selected by the client, and send the client_key_exchange message carrying the pre-master key to the server.

**24.** A server, comprising:

a second receiving unit, adapted to: receive a Client_Hello message that is sent by a client and carries a CipherSuite list; and receive a client_key_exchange message sent by the client;
a selecting unit, adapted to: select a CipherSuite of a key agreement mode of Identity-Based Cryptography (IBC), from the CipherSuite list, and send the selected CipherSuite to the client;
a server_key_exchange message sending unit, adapted to send a server_key_exchange message to the client;
a ServerHelloDone message sending unit, adapted to send a ServerHelloDone message to the client; and
a server key obtaining unit, adapted to obtain a master key according to information carried in the client_key_exchange message.

**25.** The server of claim 24, wherein:

the server key obtaining unit further comprises:

a second pre-shared key unit, adapted to: obtain IBC parameters of the client and a public key of the client from the client_key_exchange message; and obtain a pre-shared key according to the IBC algorithm by using obtained public parameters of a Key Generation Center (KGC), a private key of the server, the IBC parameters of the client, and an identity of the client; and
a fourth master key unit, adapted to obtain the master key based on the pre-shared key; and
the server_key_exchange message sending unit further comprises:

a first server sending unit, adapted to send a server_key_exchange message carrying IBC parameters of the server to the client.

**26.** The server of claim 24, wherein:

the server key obtaining unit further comprises:

a fifth master key unit, adapted to: obtain Diffie-Hellman public parameters of the client from the client_key_exchange message; generate a Diffie-Hellman pre-shared key by using the Diffie-Hellman public parameters of the server the Diffie-Hellman public parameters and private parameters of the client, use the Diffie-Hellman pre-shared key as a pre-master key, and generate the master key according to the pre-master key; and
the server_key_exchange message sending unit further comprises:

a second server sending unit, adapted to send the server_key_exchange message carrying Diffie-Hellman public parameters of the server and a signature generated with Identity-Based Signature (IBS) to the public parameters of the server to the client.

**27.** The server of claim 26, wherein the server further comprises:

a second obtaining unit, adapted to obtain the signature generated with the IBS to the Diffie-Hellman public parameters of the client from the client_key_exchange message; and
a second verifying unit, adapted to: verify the signature generated with the IBS to the Diffie-Hellman public parameters of the client according to obtained public parameters of a client Key Generation Center (KGC) and a public key of the client;
and if the verification succeeds, control the fifth master key unit to generate the Diffie-Hellman pre-shared key.

**28.** The server of claim 24, wherein the server key obtaining unit further comprises:

a sixth master key unit, adapted to: obtain an encrypted pre-master key from the client_key_exchange message; decrypt the pre-master key to obtain a decrypted pre-master key by using obtained public parameters of a server Key Generation Center (KGC), a public key of the server, and a control parameter selected by the client, and generate the master key according to the pre-master key.

| Client | | Server |
|---|---|---|

101. Client_Hello message

102. Server_Hello message

103. Server certificate or certificate chain

104. Generate a pair of temporary public key and private key

105. server_key_exchange message

106. certificate_request

107. ServerHelloDone

108. Verify the server certificate

109. Client certificate or certificate chain

1010. Generate a pre-master key

1011. Pre-master key

1012. Generate a master key out of the pre-master key

1013. certificate_verify

1014. Generate a master key out of the pre-master key

1015. Verify the certificate_verify message by using the client certificate

FIG. 1

| Client | | Server |
|---|---|---|

201. Client_Hello message →

← 202. Selected key agreement mode

← 203. server_key_exchange message

← 204. ServerHelloDone

205. client_key_exchange message →

| 206. Calculate out a pre-shared key | | 209. Calculate out a pre-shared key |

| 207. Generate a pre-master key | | 2010. Generate a pre-master key |

| 208. Generate a master key out of the pre-master key | | 2011. Generate a master key out of the pre-master key |

FIG. 2

| Client | | Server |
|--------|--|--------|

301. Client_Hello message →

← 302. Selected key agreement mode of IBC

← 303. server_key_exchange message

← 304. ServerHelloDone

305. Verify the signature in the server_key_excha nge message

306. client_key_exchange message →

307. Verify the signature in the client_key_exchan ge message

308. Generate a pre-master key

309. Generate a pre-master key

3010. Generate a master key out of the pre-master key

3011. Generate a master key out of the pre-master key

FIG. 3

| Client | | Server |
|--------|--|--------|

401. Client_Hello message →

← 402. Selected key agreement mode

← 403. server_key_exchange message

← 404. ServerHelloDone

405. Generate a pre-master key

406. client_key_exchange message →

407. Generate a master key out of the pre-master key

408. Generate a master key out of the pre-master key

FIG. 4

EP 2 173 055 A1

FIG. 5

## INTERNATIONAL SEARCH REPORT

| International application No. |
| --- |
| PCT/CN2008/072547 |

A.  CLASSIFICATION OF SUBJECT MATTER

### H04L 9/00 (2006.01)i

According to International Patent Classification (IPC) or to both national classification and IPC

B.  FIELDS SEARCHED

Minimum documentation searched (classification system followed by classification symbols)

### IPC: H04L, H04J, H04Q, H04B, G06F

Documentation searched other than minimum documentation to the extent that such documents are included in the fields searched

Electronic data base consulted during the international search (name of data base and, where practicable, search terms used)

CPRS, CNKI, WPI, EPODOC, PAJ: transport layer security protocol/TLS, identifier/identification/identify/ID, IBC/IBAKA/IBE/IBS, key/cipher/cryptograph+/encrypt+, negotiat+, server, cipher suite

C.  DOCUMENTS CONSIDERED TO BE RELEVANT

| Category* | Citation of document, with indication, where appropriate, of the relevant passages | Relevant to claim No. |
| --- | --- | --- |
| A | CN1929371 A (HUAWEI TECHNOLOGIES CO LTD) 14 Mar. 2007 (14.03.2007)   see the whole document | 1-28 |
| A | CN101047945 A (HUAWEI TECHNOLOGIES CO LTD) 03 Oct. 2007 (03.10.2007)   see the whole document | 1-28 |
| A | CN101009919 A (HUAWEI TECHNOLOGIES CO LTD) 01 Aug. 2007 (01.08.2007)   see the whole document | 1-28 |
| A | CN1764195 A (ZTE CORP) 26 Apr. 2006 (26.04.2006)   see the whole document | 1-28 |
| A | CN1921682 A (HUAWEI TECHNOLOGIES CO LTD) 28 Feb. 2007 (28.02.2007)   see the whole document | 1-28 |
| A | CN1697373 A (ZHONG XING COMMUNICATION CO LTD SHENZHE) 16 Nov. 2005 (16.11.2005)   see the whole document | 1-28 |

☒ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim (S) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 Dec. 2008 (25.12.2008) | **15 Jan. 2009 (15.01.2009)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer CUI Lei Telephone No. (86-10)62411486 |
| --- | --- |

Form PCT/ISA/210 (second sheet) (April 2007)

## INTERNATIONAL SEARCH REPORT

| | International application No. |
|---|---|
| | PCT/CN2008/072547 |

C (Continuation).    DOCUMENTS CONSIDERED TO BE RELEVANT

| Category* | Citation of document, with indication, where appropriate, of the relevant passages | Relevant to claim No. |
|---|---|---|
| A | CN1767429 A (DA TANG MOBILE COMMUNICATION EQUIP)<br>03 May 2006 (03.05.2006)   see the whole document | 1-28 |
| A | CN1564514 A (ZHONXING COMMUNICATION CO LTD)<br>12 Jan. 2005 (12.01.2005)   see the whole document | 1-28 |
| A | CN101076190 A (EADS SECURE NETWORKS OY)<br>21 Nov. 2007 (21.11.2007)   see the whole document | 1-28 |
| A | CN1701315 A (NIPPON TELEGRAPH & TELEPHONE COR)<br>23 Nov. 2005 (23.11.2005)   see the whole document | 1-28 |
| A | CN1937489 A (XIDIAN JIETONG WIRE-LESS NETWORK COMMUNI)<br>28 Mar. 2007 (28.03.2007)   see the whole document | 1-28 |
| A | CN1980123 A (POSTGRADUATE INST CAS)<br>13 Jun. 2007 (13.06.2007)   see the whole document | 1-28 |
| A | CN1956374 A (TENGXUN SCI & TECHNOLOGY SHENZHEN CO LT)<br>02 May 2007 (02.05.2007)   see the whole document | 1-28 |
| A | CN1625101 A (NO 30 INST CHINA ELECTRONIC SCI & TECH)<br>08 Jun. 2005 (08.06.2005)   see the whole document | 1-28 |
| A | CN101060530 A (ZHAO Y)<br>24 Oct. 2007 (24.10.2007)   see the whole document | 1-28 |
| A | CN1655498 A (GUAN H)<br>17 Aug. 2005 (17.08.2005)   see the whole document | 1-28 |
| A | CN1863040 A (HUAWEI TECHNOLOGIES CO LTD)<br>15 Nov. 2006 (15.11.2006)   see the whole document | 1-28 |
| A | CN1564626 A (UNIV XIDIAN)<br>12 Jan. 2005 (12.01.2005)   see the whole document | 1-28 |
| A | CN1889433 A (UNIV SHANGHAI JIAOTONG)<br>03 Jan. 2007 (03.01.2007)   see the whole document | 1-28 |
| A | CN101030862 A (ZTE COMMUNICATION CO LTD)<br>05 Sep. 2007 (05.09.2007)   see the whole document | 1-28 |
| A | WO2006051517 A1 (DUBLIN CITY UNIVERSITY)<br>18 May 2006 (18.05.2006)   see the whole document | 1-28 |
| A | US6931528 B1 (NOKIA NETWORKS OY)<br>16 Aug. 2005 (16.08.2005)   see the whole document | 1-28 |
| A | US2006095771 A1 (VOLTAGE SECURITY INC)<br>04 May 2006 (04.05.2006)   see the whole document | 1-28 |
| A | US2007199071 A1 (PGP CORP)<br>23 Aug. 2007 (23.08.2007)   see the whole document | 1-28 |
| A | JP2005176144 A (NTT DOCOMO INC)<br>30 Jun. 2005 (30.06.2005)   see the whole document | 1-28 |
| A | WO2007017884 A (HEWLETT PACKARD DEVELOPMENT CO)<br>15 Feb. 2007 (15.02.2007)   see the whole document | 1-28 |

Form PCT/ISA/210 (continuation of second sheet ) (April 2007)

# INTERNATIONAL SEARCH REPORT
Information on patent family members

International application No.

PCT/CN2008/072547

| Patent Documents referred in the Report | Publication Date | Patent Family | Publication Date |
|---|---|---|---|
| CN1929371A | 14.03.2007 | WO2007028328A1 | 15.03.2007 |
| | | EP1933498A1 | 18.06.2008 |
| CN101047945A | 03.10.2007 | NONE | |
| CN101009919A | 01.08.2007 | EP1811744A1 | 25.07.2007 |
| | | WO2007085175A1 | 02.08.2007 |
| | | CN101052032A | 10.10.2007 |
| | | CN101060406A | 24.10.2007 |
| | | CN101156352A | 02.04.2008 |
| | | US2008178004A1 | 24.10.2008 |
| CN1764195A | 26.04.2006 | NONE | |
| CN1921682A | 28.02.2007 | WO2007022731A1 | 01.03.2007 |
| CN1697373A | 16.11.2005 | NONE | |
| CN1767429A | 03.05.2006 | NONE | |
| CN1564514A | 12.01.2005 | CN100359845C | 02.01.2008 |
| CN101076190A | 21.11.2007 | WO9727716A1 | 31.07.1997 |
| | | FI960325A | 25.07.1997 |
| | | AU1446797A | 20.08.1997 |
| | | EP0872151A1 | 21.10.1998 |
| | | FI102235B1 | 30.10.1998 |
| | | NZ326379A | 25.11.1998 |
| | | CN1209939A | 03.03.1999 |
| | | AU716523B | 24.02.2000 |
| | | JP2000504156T | 04.04.2000 |
| | | KR19990077193A | 25.10.1999 |
| | | US6199161B1 | 06.03.2000 |
| | | EP0872151B1 | 26.07.2006 |
| | | DE69736384E | 07.09.2006 |
| | | ES2267128T3 | 01.03.2007 |
| | | DE69736384T2 | 09.08.2007 |
| CN1701315A | 23.11.2005 | WO2005006204A1 | 20.11.2005 |
| | | EP1645971A1 | 12.04.2006 |
| | | US2006143189A1 | 29.06.2006 |
| | | JP2005511550T | 24.08.2006 |
| CN1937489A | 28.03.2007 | WO2008034362A1 | 27.03.2008 |
| CN1980123A | 13.06.2007 | NONE | |
| CN1956374A | 02.05.2007 | NONE | |
| CN1625101A | 08.06.2005 | NONE | |
| CN101060530A | 24.10.2007 | NONE | |
| CN1655498A | 17.08.2005 | WO2005078991A1 | 25.08.2005 |
| CN1863040A | 15.11.2006 | NONE | |
| CN1564626A | 12.01.2005 | CN1298194C | 31.01.2007 |
| CN1889433A | 03.01.2007 | NONE | |
| CN101030862A | 05.09.2007 | NONE | |
| WO2006051517A1 | 18.05.2006 | EP1813051A1 | 01.08.2007 |
| | | US2008144837A1 | 19.06.2008 |
| US6931528B1 | 16.08.2005 | WO9925093A2 | 20.05.1999 |
| | | FI974186A | 11.05.1999 |
| | | AU1035999A | 31.05.1999 |
| | | FI104666B1 | 14.04.2000 |
| | | TW380346A | 21.01.2000 |
| US2006095771A1 | 04.05.2006 | WO2006049832A2 | 11.05.2006 |
| | | EP1807963A2 | 18.07.2007 |
| | | US7370202B2 | 06.05.2008 |
| US2007199071A1 | 23.08.2007 | WO2006034428A2 | 30.03.2006 |
| JP2005176144A | 30.06.2005 | NONE | |
| WO2007017884A1 | 15.02.2007 | EP1913509A1 | 23.04.2008 |

Form PCT/ISA/210 (patent family annex) (April 2007)